# EUROPÄISCHE PATENTSCHRIFT

(11) **EP 1 613 512 B1**
(45) Veröffentlichungstag und Bekanntmachung des Hinweises auf die Patenterteilung: **04.06.2008**
(21) Anmeldenummer: 04706647.7
(22) Anmeldetag: 30.01.2004
(51) Int. Cl.: B60R 21/09, B60R 25/04

(54) **VERFAHREN ZUM BETREIBEN EINES FORTBEWEGUNGSMITTELS UND ENTSPRECHENDE VORRICHTUNG**
METHOD FOR OPERATING A LOCOMOTIVE MEANS AND CORRESPONDING DEVICE
PROCEDE POUR FAIRE FONCTIONNER UN MOYEN DE LOCOMOTION ET DISPOSITIF ASSOCIE

(30) Priorität: 02.04.2003 DE 10315023
(43) Veröffentlichungstag der Anmeldung: 11.01.2006
(73) Patentinhaber: Volkswagen Aktiengesellschaft, 38436 Wolfsburg (DE)
(72) Erfinder: BORNGRÄBER, Ralf, 38165 Lehre (DE); FROHNE, Hans-Joachim, 38165 Lehre (DE)
(74) Vertreter: Banzer, Hans-Jörg
(86) Internationale Anmeldenummer: PCT/EP2004/000835
(87) Internationale Veröffentlichungsnummer: WO 2004/087470

(56) Entgegenhaltungen:
- CA-A- 974 313
- DE-A- 19 853 075
- DE-A- 19 939 733

## Beschreibung

Die vorliegende Erfindung betrifft ein Verfahren zum Betreiben eines Fortbewegungsmittels und eine Vorrichtung mit einer Steuerung, die gemäß dem Verfahren ausgestaltet ist, wie sie insbesondere zum Starten eines Motors eines Kraftfahrzeuges eingesetzt werden kann.

Die Druckschrift DE 199 39 733 A1, die dem Oberbegriff den unabhängigen Anspruch 1 und 6 entspricht, beschreibt einen Schlüssel, welcher in einer Aufnahme in drei axiale Hublagen überführt werden kann. Zum Starten des Motors wird der Schlüssel ausgehend von einer Mittellage um eine weitere Hubstrecke in eine Endlage überführt. Dabei wird der Motor gestartet. Die Endlage wird allerdings nur impulsweise erreicht, d.h. der Schlüssel kommt (bei dann laufendem Motor) zu der Mittellage zurück. Gemäß dieser Druckschrift wird bezüglich der Stellung oder Lage des Schlüssels nicht zwischen einem ersten Zustand (Zündung an; Motor läuft nicht) und einem zweiten Zustand (Motor läuft) unterschieden, da sich der Schlüssel in beiden Fällen in der Mittellage befindet. Dabei kann der Schlüssel in dem ersten Zustand (Zündung an; Motor läuft nicht) nicht aus der Schlüsselaufnahme entfernt werden, ohne dass der Motor vorher gestartet wird.

Die Druckschrift DE 198 53 075 A1 offenbart ein Fahrberechtigungssystem mit einer fahrzeugfesten elektronisch codierbaren Erkennungseinrichtung und einer entsprechenden darin einbringbaren externen elektronischen Freigabeeinrichtung. Diese Freigabeeinrichtung kann in drei Positionen gebracht werden, wobei bei einer Ausführungsform die zweite Position von der Freigabeeinrichtung sowohl in einem Zustand, in welchem die Zündung eingeschaltet ist und der Motor nicht läuft, als auch in einem Zustand, in welchem der Motor läuft, angenommen wird.

Zum Starten eines Motors eines Fortbewegungsmittels wird heute in den meisten Fällen ein Zündschlüssel in eine Schlüsselaufnahme, im Allgemeinen Zündschloss genannt, eingeschoben. Durch Drehen des eingeschobenen Zündschlüssels in der Schlüsselaufnahme in eine erste Stellung wird im Allgemeinen das Lenkradschloss entriegelt, eine eventuell vorhandene Wegfahrsperre deaktiviert und elektrische Anlagen (z.B. Radio, Klimaanlage) mit elektrischem Strom aus der Stromversorgung des Fortbewegungsmittels versorgt. Durch ein weiteres Drehen des eingeschobenen Zündschlüssels in der Schlüsselaufnahme in eine zweite Stellung wird meist ein Anlasser des Fortbewegungsmittels betätigt, wodurch der Motor des Fortbewegungsmittels gestartet wird. Zum Stoppen des laufenden Motors wird der Zündschlüssel im Allgemeinen in der Schlüsselaufnahme über die erste Stellung zurückgedreht. Bei den oben beschriebenen Drehungen steht die Drehachse gewöhnlich senkrecht zu einem Armaturenbrett, in dem die Schlüsselaufnahme angeordnet ist.

Um bei dem oben beschriebenen üblichen Verfahren einen Motor eines Fortbewegungsmittels zu starten, ragt zumindest bei laufendem Motor ein Teil des Zündschlüssels aus dem Armaturenbrett heraus, was bei einem Unfall zu Verletzungen z.B. im Kniebereich des Fahrers führen kann.

Des Weiteren sind bei höherwertigen Fortbewegungsmitteln "Keyless-Go"- und "Keyless-Entry"-Systeme bekannt, bei denen ein Funksender, den der berechtigte Betreiber des Fortbewegungsmittels mit sich trägt, ein entsprechendes Funksignal aussendet, das von einem Funkempfänger des Fortbewegungsmittels erkannt wird. Bei Empfang dieses Funksignals wird das Fortbewegungsmittel in einen Zustand versetzt, in dem ein Motor des Fortbewegungsmittel mit einer Taste ("Start/Stop-Taste") gestartet und gestoppt werden kann.

Aus der Patentschrift DE 195 07 154 C2 ist ein Zündschloss zur Aufnahme eines Zündschlüssels bekannt, bei dem die Drehachse, um die der Zündschlüssel gedreht wird, in der Ebene des Armaturenbretts liegt. Dadurch ist der Zündschlüssel im Armaturenbrett versenkt, wenn der Motor läuft, wodurch die Verletzungsgefahr aufgrund des herausragenden Zündschlüssels ausgeschlossen ist.

Dennoch muss auch bei dem Zündschloss gemäß Patentschrift DE 195 07 154 C2, wie auch bei dem weiter oben beschriebenen heute meist üblichen Verfahren, der Zündschlüssel z.B. zum Starten des Motors gedreht werden. Dies erfordert eine schwierige Handhabung, da z.B. der Zündschlüssel erst korrekt (z.B. weit genug) eingeschoben werden muss, bevor er gedreht werden kann. Des Weiteren erfordert ein Zündschloss, bei dem der Zündschlüssel gedreht werden muss, eine relativ komplexe Mechanik. Auch ist ein Kontaktsystem des Zündschlosses, bei dem der Zündschlüssel gedreht werden muss, gegebenenfalls unzuverlässig, da eine Rotationsbewegung erforderlich ist. Außerdem benötigt das Zündschloss, bei dem der Zündschlüssel gedreht werden muss, einen relativ großen Bauraum, was eine unflexible Gestaltung des Interieurs bedeutet.

Der Erfindung liegt daher die Aufgabe zugrunde, ein Verfahren sowie eine Vorrichtung zum Betreiben eines Fortbewegungsmittels bereit zu stellen, bei dem die zuvor beschriebenen Probleme, welche mit einem Drehen des Zündschlüssels verbunden sind, vermieden werden, wobei sich der Zündschlüssel bei laufendem Motor in einer Stellung befinden soll, so dass bei einem Unfall keine Verletzungsgefahr von dem Zündschlüssel ausgeht.

Diese Aufgabe wird erfindungsgemäß durch ein Verfahren gemäß Anspruch 1 bzw. eine Vorrichtung gemäß Anspruch 6 gelöst, Die abhängigen Ansprüche definieren bevorzugte und vorteilhafte Ausführungen der Erfindung.

Im Rahmen der vorliegenden Erfindung wird ein Motor eines Fortbewegungsmittels dadurch gestartet, dass zuerst ein Zündschlüssel in ein Zündschloss des Fortbewegungsmittels geschoben wird, wodurch ein Lenkradschloss und eine Wegfahrsperre deaktiviert werden kann und elektrische Anlagen (z.B. Radio, Klimaanlage) mit elektrischem Strom aus einer Stromversorgung des Fortbewegungsmittels versorgt werden können. Durch ein Drücken des Zündschlüssels, wodurch dieser weiter in das Zündschloss eingeführt wird, kann das Fortbewegungsmittel gestartet werden. Dabei nimmt der Zündschlüssel bei laufendem Motor eine nahezu bündige Lage mit einer Oberfläche des Zündschlosses ein, so dass bei einem Unfall keine Verletzungsgefahr von dem Zündschlüssel ausgeht.

In einer bevorzugten Ausführungsform der vorliegenden Erfindung wird der Motor des Fortbewegungsmittels gestoppt, indem der Zündschlüssel nochmals gedrückt wird, wodurch der Zündschlüssel nochmals weiter in das Zündschloss eingeführt wird. Dabei kann der Zündschlüssel, nachdem der Motor gestoppt wurde, in eine Stellung gebracht werden, dass er einfach vom Fahrer des Fortbewegungsmittels aus dem Zündschloss entnommen werden kann.

Im Vergleich zu einem herkömmlichen Zündschloss besitzt das erfindungsgemäße Zündschloss eine einfachere Handhabung, da der Zündschlüssel nicht gedreht, sondern nur eingeschoben werden muss. Auch ist das Kontaktsystem des erfindungsgemäßen Zündschlosses im Vergleich zu einem herkömmlichen Zündschloss zuverlässiger, da keine Rotationsbewegung erforderlich ist. Des Weiteren benötigt das erfindungsgemäße Zündschloss im Vergleich zu einem herkömmlichen Zündschloss weniger Bauraum, was eine flexiblere Gestaltung des Interieurs bedeutet.

Die vorliegende Erfindung wird nachfolgend näher unter Bezugnahme auf die beigefügte Zeichnung anhand bevorzugter Ausführungsbeispiele erläutert.

Fig. 1 zeigt ein Blockschaltbild einer Vorrichtung zum Betreiben eines Fortbewegungsmittels gemäß einer bevorzugten Ausführungsform der vorliegenden Erfindung.

Fig. 2 zeigt das Zustandsübergangsdiagramm der Zustände einer Steuerung aus Fig. 1.

Fig. 3a bis Fig. 3c zeigen bestimmte Zündschlüsselstellungen gemäß einer bevorzugten Ausführungsform der vorliegenden Erfindung.

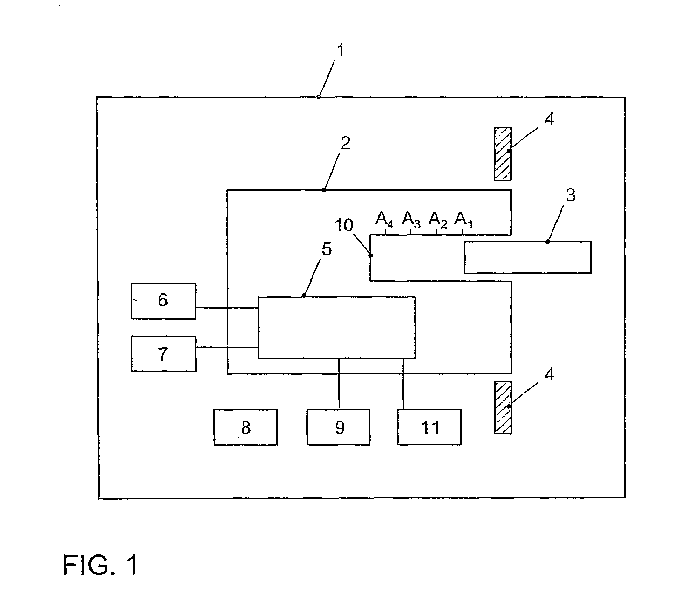

In Fig. 1 ist schematisch ein Fortbewegungsmittel 1 bzw. ein Kraftfahrzeug dargestellt, in dessen Zündschloss 2 ein Zündschlüssel 3 bis zu einer Position A₁ eingeschoben ist. Das Zündschloss 2 ist in einem Armaturenbrett 4 derart angeordnet, dass es mit diesem bündig abschließt. Dem Zündschloss 2 ist eine Steuerung 5 zugeordnet, die überwacht, bis zu welcher Position (A₁ bis A₄) der Zündschlüssel 3 in ein Führungs- und Haltesystem 10 des Zündschlosses 2 eingeschoben wird. Die Steuerung 5 gemäß Fig. 1 steuert die Stromzufuhr für elektrische Anlagen, beispielsweise ein Radio 6 oder eine Klimaanlage 11, aktiviert und deaktiviert eine Wegfahrsperre 7 und ein Lenkradschloss 8 und startet und stoppt einen Motor 9 des Fortbewegungsmittels.

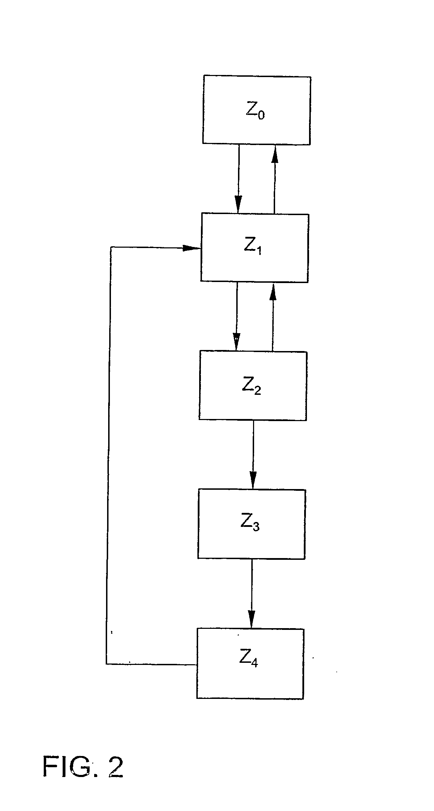

In Fig. 2 sind Zustände der Steuerung 5 und Zustandsübergänge dargestellt. Wenn der Zündschlüssel 3 bis zur Position A₁ in das Zündschloss 2 eingeschoben wird, geht die Steuerung 5 aus einem initialen Zustand Z₀ in einen Zustand Z₁ (S-Kontakt) über. In dem Zustand Z₁ kann der Zündschlüssel 3 entweder wieder entfernt werden, wodurch die Steuerung in den Zustand Z₀ zurückkehrt, oder er kann über die Position A₁ hinaus bis zur Position A₂ eingeschoben werden, wobei die Steuerung 5 in einen Zustand Z₂ (Klemme 15) übergeht. In dem Zustand Z₂ kann der Zündschlüssel 3 entweder bis zur Position A₁ herausgezogen werden, wodurch die Steuerung in den Zustand Z₁ zurückkehrt, oder er kann über die Position A₂ und Position A₃ hinaus bis zur Position A₄ eingeschoben werden, wodurch die Steuerung 5 in einen Zustand Z₃ (Klemme 50) übergeht. Im Zustand Z₃ kann der Zündschlüssel 5 losgelassen werden, wodurch die Steuerung 5 in einen Zustand Z₄ (Klemme 15 Fahrt) übergeht und den Zündschlüssel bis zur Position A₃ hinaus schiebt. In dem Zustand Z₄ kann der Zündschlüssel 3 nochmals bis über die Position A₃ hinaus eingeschoben werden, wodurch die Steuerung 5 in den Zustand Z₁ zurückkehrt.

Im Zündschloss 2 kann auf der Position A₂ ein Anschlag vorhanden sein, der verhindert, dass der Zündschlüssel 3 in einer Bewegung von der Position A₁ bis zur Position A₄ geschoben werden kann.

Im Zustand Z₀ befindet sich der Zündschlüssel 3 außerhalb des Zündschlosses 2 oder ist zumindest nicht bis zur Position A₁ eingeschoben. In diesem Zustand Z₀ kann z.B. die Stromversorgung der elektrischen Anlage 6 deaktiviert, die Wegfahrsperre 7 und das Lenkradschloss 8 aktiviert sein, während der Motor 9 nicht läuft. Im Zustand Z₁ kann die Stromversorgung einiger elektrischer Anlagen (z.B. des Radios 6) aktiviert sowie die Wegfahrsperre 7 und das Lenkradschloss 8 deaktiviert (wahlweise mechanisch oder elektronisch), aber die Stromversorgung anderer elektrischer Anlagen (z.B. der Klimaanlage 11) deaktiviert sein, während der Motor 9 nicht läuft. Im Zustand Z₂ kann die Stromversorgung der elektrischen Anlagen Radio 6 und Klimaanlage 11 aktiviert, die Wegfahrsperre 7 und das Lenkradschloss 8 deaktiviert und alle Hauptverbraucher des Fortbewegungsmittels 1 eingeschaltet sein, während der Motor 9 nicht läuft. Im Zustand Z₃ können nur die zum Start des Motors 9 benötigten Verbraucher eingeschaltet sein, während der Motor gestartet wird. Im Zustand Z₄ kann die Stromversorgung der elektrischen Anlagen Radio 6 und Klimaanlage 11 aktiviert, die Wegfahrsperre 7 und das Lenkradschloss 8 deaktiviert sein und alle Hauptverbraucher eingeschaltet sein, während der Motor 9 läuft. Beim Übergang vom Zustand Z₄ in den Zustand Z₁ kann der Motor gestoppt werden. Im Zustand Z₄ kann sich der Zündschlüssel 3 in einer Stellung befinden, so dass er nicht mehr als 2 mm aus dem Zündschloss 2 herausragt, so dass bei einem Unfall keine Verletzungsgefahr von dem Zündschlüssel 3 ausgeht. Dies ist insbesondere in Ländern mit erhöhten Sicherheitsanforderungen bei Auffahrunfällen von Bedeutung.

Beim Übergang vom Zustand Z₄ in den Zustand Z₁ wird der Zündschlüssel 3 von der Steuerung 5 hinaus geschoben (ausgeworfen), so dass sich der vordere Teil des Zündschlüssels bei der Position A₁ befindet und der Zündschlüssel 3 leicht vom Fahrer des Fortbewegungsmittels 1 aus dem Zündschloss 2 entfernt werden kann.

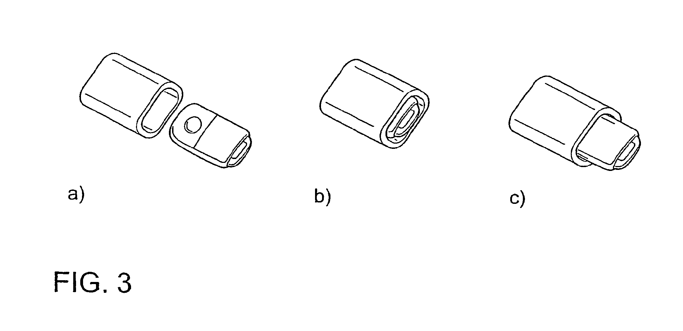

Fig. 3a zeigt den Zündschlüssel 3 vor dem Einschieben in das Zündschloss 2 (Zustand Z₀). Fig. 3b zeigt den Zündschlüssel 3 während des Startvorganges, d.h. der Zündschlüssel 3 wird über die Position A₃ hinaus bis zur Position A₄ in das Zündschloss 2 eingeschoben (Übergang von Zustand Z₃ in den Zustand Z₄). Fig. 3c zeigt den Zündschlüssel 3 nachdem der Motor 9 gestoppt wurde und der Zündschlüssel 3 ausgeworfen wurde (Zustand Z₁).

Bei höherwertigen Fortbewegungsmitteln, die mit "Keyless-Go"- und "Keyless-Entry"-Systemen ausgestattet sind, kann anstelle des Zündschlüssels 3 ein Adaptionsmodul (Schlüssel-Dummy) in das Zündschloss 2 eingeführt werden, das nach dem ersten meist werksseitigen Einführen über eine Verrastung mit dem Zündschloss 2 verbunden ist. Das Adaptionsmodul sollte derart mit dem Zündschloss verbunden sein, dass es nur noch von berechtigten Personen (Fachpersonal) entfernt werden kann. Das Zündschloss 2 mit dem eingeführten Adaptionsmodul kann dann als Start/Stop-System eingesetzt werden. Dazu kann die Steuerung 5 mit einem auf ein entsprechendes Funksignal geeichten Funkempfänger gekoppelt sein. Sobald der Funkempfänger dieses entsprechende Funksignal empfängt und sich die Steuerung 5 im Zustand Z₀ befindet, geht die Steuerung in den Zustand Z₁ über. Wenn sich die Steuerung 5 im Zustand Z₁ befindet und der Funkempfänger in einem bestimmten Zeitintervall kein entsprechendes Funksignal empfängt, geht die Steuerung 5 in den Zustand Z₀ über. Das entsprechende Funksignal wird dabei von einem Gerät ausgesandt, das ein berechtigter Fahrer des Fortbewegungsmittels 1 bei sich trägt.

Durch den Einsatz des Schlüssel-Dummys ist die Produktion von Fortbewegungsmitteln 1 mit "Keyless-Go"- und "Keyless-Entry"-System der Produktion von Fortbewegungsmitteln 1 ohne "Keyless-Go"- und "Keyless-Entry"-System sehr ähnlich, was einen produktionstechnischen Vorteil bedeutet. Der einzige Unterschied besteht darin, dass bei Fortbewegungsmitteln 1 mit "Keyless-Go"- und "Keyless-Entry"-System anstelle des Zündschlüssels 3 ein Adaptionsmodul in das Zündschloss 2 eingeführt wird.

In einer bevorzugten Ausprägungsform des oben beschriebenen "Keyless-Go"- und "Keyless-Entry"-Systems werden die Zustände Z₁ und Z₂ zu einem neuen Zustand Z₁₂ zusammengelegt. Dabei können im Zustand Z₁₂ alle Mittel aktiviert und deaktiviert sein, die auch in einem der beiden Z₁ oder Z₂ aktiviert oder deaktiviert sind. Die Zustandsübergänge Z₀ -> Z₁, Z₁ -> Z₀, Z₂ -> Z₃, Z₄ -> Z₁ werden durch die Zustandsübergänge Z₀ -> Z₁₂, Z₁₂ -> Z₀, Z₁₂ -> Z₃, Z₄ -> Z₁₂ ersetzt, während die Zustandsübergänge Z₁ -> Z₂ und Z₂ -> Z₁ entfallen.

### BEZUGSZEICHENLISTE

- 1: Fortbewegungsmittel
- 2: Zündschloss / Schlüsselaufnahme
- 3: Zündschlüssel
- 4: Armaturenbrett
- 5: Steuerung
- 6: elektrische Anlage (Radio)
- 7: Wegfahrsperre
- 8: Lenkradschloss
- 9: Motor
- 10: Führungs- und Haltesystem
- 11: elektrische Anlage (Klimaanlage)
- A₁: erste Position
- A₂: zweite Position
- A₃: dritte Position
- A₄: vierte Position
- Z₀: Initialzustand "Vorraste"
- Z₁: Zustand "S-Kontakt"
- Z₂: Zustand "Klemme 15"
- Z₃: Zustand "Klemme 50"
- Z₄: Zustand "Klemme 15 Fahrt"

## Patentansprüche

1. Verfahren zum Betreiben eines Fortbewegungsmittels (1), wobei ein Zündschlüssel (3) bis zu einer Position A₂ in eine Schlüsselaufnahme (2) eingeschoben wird, wobei allein durch das Einschieben bis zu der Position A₂ ein Zustand Z₂ erreicht wird, welcher als Klemme 15 bekannt ist, und wobei, wenn sich das Verfahren in dem Zustand Z₂ befindet, durch ein weiteres Einschieben des Zündschlüssels (3) bis zu einer Position A₄ ein Zustand Z₃ erreicht wird, wobei im Zustand Z₃ ein Motor (9) des Fortbewegungsmittels (1) gestartet wird, **dadurch gekennzeichnet, dass**, wenn sich das Verfahren in dem Zustand Z₃ befindet, durch ein Loslassen des Zündschlüssels (3), wodurch der Zündschlüssel (3) zur Position A₃ hinaus geschoben wird, ein Zustand Z₄ erreicht wird, in welchem der Motor läuft, und dass die Position A₃ zwischen der Position A₂ und der Position A₄ angeordnet ist.

2. Verfahren nach Anspruch 1, **dadurch gekennzeichnet, dass**, wenn sich das Verfahren in dem Zustand Z₄ befindet, durch ein erneutes Einschieben des Zündschlüssels (3) ein Zustand Z₁ des Verfahrens erreicht wird, wobei bei dem Übergang von dem Zustand Z₄ in den Zustand Z₁ der Motor (9) gestoppt wird.

3. Verfahren nach Anspruch 2, **dadurch gekennzeichnet, dass** das Verfahren beim Einschieben des Zündschlüssels (3) bis zu der Position A₂ ausgehend von einem initialen Zustand Z₀ des Verfahrens erst den Zustand Z₁, in dem der Motor (9) gestoppt ist, durchläuft, bevor es den Zustand Z₂ erreicht.

4. Verfahren nach Anspruch 3, **dadurch gekennzeichnet, dass** bei einem Übergang von dem Zustand Z₀ in den Zustand Z₁ eine Wegfahrsperre (7) und ein Lenkradschloss (8) des Fortbewegungsmittels (1) deaktiviert und eine Stromversorgung zumindest einer elektrischen Anlage (6,11) des Fortbewegungsmittels (1) aktiviert wird, und dass bei einem Übergang von dem Zustand Z₁ in den Zustand Z₀ die Wegfahrsperre (7) des Fortbewegungsmittels (1) und das Lenkradschloss (8) des Fortbewegungsmittels (1) aktiviert und die Stromversorgung der zumindest einen elektrischen Anlage (6,11) des Fortbewegungsmittels (1) deaktiviert wird.

5. Verfahren nach Anspruch 3 oder 4, **dadurch gekennzeichnet, dass** bei einem Übergang von dem Zustand Z₁ in den Zustand Z₂ eine Stromversorgung zumindest einer elektrischen Anlage (6,11) des Fortbewegungsmittels (1) aktiviert wird, und dass bei einem Übergang von dem Zustand Z₂ in den Zustand Z₁ die Stromversorgung der zumindest einen elektrischen Anlage (6,11) des Fortbewegungsmittels (1) deaktiviert wird.

6. Vorrichtung zum Betreiben eines Fortbewegungsmittels (1) mit einer Schlüsselaufnahme (2) zum Einschieben eines Zündschlüssels (3), wobei eine Steuerung (5) vorgesehen ist, welche derart ausgestaltet ist, dass sie die Position des Zündschlüssels (3) in der Schlüsselaufnahme (2) erfasst, wobei die Steuerung (5) derart ausgestaltet ist, dass sie erkennt, ob der Zündschlüssel (3) bis zu einer Position A₂ eingeschoben ist, wobei allein durch das Einschieben bis zu der Position A₂ die Steuerung (5) einen Zustand Z₂ annimmt, welcher als Klemme 15 bekannt ist, und wobei, wenn sich die Steuerung (5) in dem Zustand Z₂ befindet und wenn die Steuerung (5) erkennt, dass der Zündschlüssel (3) weiter bis zu der Position A₄ eingeschoben ist, die Steuerung (5) einen Zustand Z₃ annimmt, wobei die Steuerung (5) in dem Zustand Z₃ einen Motor (9) des Fortbewegungsmittels (1) startet, **dadurch gekennzeichnet, dass**, wenn sich die Steuerung (5) in dem Zustand Z₃ befindet, durch ein Loslassen des Zündschlüssels (3), wodurch der Zündschlüssel (3) zur Position A₃ hinaus geschoben wird, ein Zustand Z₄ erreicht wird, in welchem der Motor (9) läuft, und dass die Position A₃ zwischen der Position A₂ und der Position A₄ angeordnet ist.

7. Vorrichtung nach Anspruch 6, **dadurch gekennzeichnet, dass**, wenn sich die Steuerung (5) in dem Zustand Z₄ befindet und wenn die Steuerung (5) erkennt, dass der Zündschlüssel (3) bis über die Position A₃ hinaus eingeschoben ist, die Steuerung (5) einen Zustand Z₁ annimmt, wobei die Steuerung (5) bei dem Übergang von dem Zustand Z₄ in den Zustand Z₁ den Motor (9) stoppt.

8. Vorrichtung nach Anspruch 7, **dadurch gekennzeichnet, dass** die Steuerung (5) beim Einschieben des Zündschlüssels (3) bis zu der Position A₂ ausgehend von einem initialen Zustand Z₀ der Steuerung (5) erst einen Zustand Z₁ durchläuft.

9. Vorrichtung nach Anspruch 8, **dadurch gekennzeichnet, dass** die Steuerung (5) in dem Zustand Z₁ eine Wegfahrsperre (7) und ein Lenkradschloss (8) des Fortbewegungsmittels (1) deaktiviert und eine Stromversorgung zumindest einer elektrischen Anlage (6,11) des Fortbewegungsmittels (1) aktiviert.

10. Vorrichtung nach einem der Ansprüche 6 bis 9, **dadurch gekennzeichnet, dass** die Steuerung (5) in dem Zustand Z₂ eine Stromversorgung zumindest einer elektrischen Anlage (6,11) des Fortbewegungsmittels (1) aktiviert.

11. Vorrichtung nach einem der Ansprüche 6 bis 10, **dadurch gekennzeichnet, dass** die Schlüsselaufnahme (2) in einem Armaturenbrett (4) angeordnet ist und der Zündschlüssel (3) in dem Zustand Z₄ nicht mehr als 2 mm aus dem Armaturenbrett (4) herausragt.

12. Vorrichtung nach einem der Ansprüche 6 bis 11, **dadurch gekennzeichnet, dass** die Schlüsselaufnahme (2) den Zündschlüssel (3) bei dem Übergang von Zustand Z₄ in den Zustand Z₁ derart hinausschiebt, dass sich der vordere Teil des Zündschlüssels (3) bei der Position A₁ befindet.

13. Vorrichtung nach Anspruch 12, **dadurch gekennzeichnet, dass** die Position A₁ derart gewählt ist, dass der Zündschlüssel (3) mehr als 3 cm aus dem Armaturenbrett (4) herausragt.

14. Vorrichtung nach einem der Ansprüche 6 bis 13, **dadurch gekennzeichnet, dass** der Zündschlüssel (3) an der Schlüsselaufnahme (2) angebracht ist.

15. Vorrichtung nach Anspruch 7 und Anspruch 14, **dadurch gekennzeichnet, dass** die Steuerung (5) mit einem Funkempfänger gekoppelt ist und die Steuerung (5) den Zustand Z₂ erreicht, sobald der Funkempfänger ein entsprechendes Funksignal empfängt, sofern sich die Steuerung (5) im Zustand Z₀ befindet, und dass die Steuerung (5), wenn sie sich im Zustand Z₂ befindet, in den Zustand Z₀ übergeht, wenn sie in einem bestimmten Zeitintervall kein entsprechendes Funksignal empfängt.

16. Vorrichtung nach Anspruch 15, **dadurch gekennzeichnet, dass** die Zustände Z₁ und Z₂ zusammenfallen.

## Claims

1. Method for operating a means (1) of locomotion, wherein an ignition key (3) is inserted into a key receptacle (2) as far as a position A₂, wherein solely through the insertion as far as the position A₂, a state Z₂ is reached which is known as terminal 15, and wherein, if the method is in the state Z₂, a state Z₃ is reached through further insertion of the ignition key (3) as far as a position A₄, wherein in the state Z₃ an engine (9) of the means (1) of locomotion is started, **characterized in that**, if the method is in the state Z₃, through releasing the ignition key (3) as a result of which the ignition key (3) is pushed out as far as the position A₃, a state Z₄ is reached in which the engine is running, and **in that** the position A₃ is arranged between the position A₂ and the position A₄.

2. Method according to Claim 1, **characterized in that** if the method is in the state Z₄, a state Z₁ of the method is reached through renewed insertion of the ignition key (3), wherein the engine (9) is stopped at the transition from the state Z₄ into the state Z₁.

3. Method according to Claim 2, **characterized in that** when the ignition key (3) is inserted as far as the position A₂, said method starts from an initial state Z₀ and first passes through the state Z₁ in which the engine (9) is stopped, before said method reaches the state Z₂.

4. Method according to Claim 3, **characterized in that** at a transition from the state Z₀ into the state Z₁, an immobilizer (7) and a steering wheel lock (8) of the means (1) of locomotion are deactivated, and a power supply of at least one electrical system (6, 11) of the means (1) of locomotion is activated, and **in that** at a transition from the state Z₁ into the state Z₀ the immobilizer (7) of the means (1) of locomotion and the steering wheel lock (8) of the means (1) of locomotion are activated and the power supply of the at least one electrical system (6, 11) of the means (1) of locomotion is deactivated.

5. Method according to Claim 3 or 4, **characterized in that** at a transition from the state Z₁ into the state Z₂ a power supply of at least one electrical system (6, 11) of the means (1) of locomotion is activated, and **in that** at a transition from the state Z₂ into the state Z₁ the power supply of the at least one electrical system (6, 11) of the means (1) of locomotion is deactivated.

6. Device for operating a means (1) of locomotion having a key receptacle (2) for inserting an ignition key (3), wherein a controller (5) is provided which is configured in such a way that it senses the position of the ignition key (3) in the key receptacle (2), wherein the controller (5) is configured in such a way that it detects whether the ignition key (3) is inserted as far as a position A₂, wherein solely through the insertion as far as the position A₂, the controller (5) assumes a state Z₂ which is known as terminal 15, and wherein, if the controller (5) is in the state Z₂ and if the controller (5) detects that the ignition key (3) is inserted further as far as the position A₄, the controller (5) assumes a state Z₃, wherein the controller (5) in the state Z₃ starts an engine (9) of the means (1) of locomotion, **characterized in that**, if the controller (5) is in the state Z₃, through releasing the ignition key (3) as a result of which the ignition key (3) is pushed out as far as the position A₃, a state Z₄ is reached in which the engine (9) is running, and **in that** the position A₃ is arranged between the position A₂ and the position A₄.

7. Device according to Claim 6, **characterized in that** if the controller (5) is in the state Z₄ and if the controller (5) detects that the ignition key (3) is pushed out beyond the position A₃, the controller (5) assumes a state Z₁, wherein the controller (5) stops the engine (9) at the transition from the state Z₄ into the state Z₁.

8. Device according to Claim 7, **characterized in that** when the ignition key (3) is inserted as far as the position A₂, the controller (5) starts from an initial state Z₀ and first passes through a state Z₁.

9. Device according to Claim 8, **characterized in that** in the state Z₁ the controller (5) deactivates an immobilizer (7) and a steering wheel lock (8) of the means (1) of locomotion and activates a power supply of at least one electrical system (6, 11) of the means (1) of locomotion.

10. Device according to one of Claims 6 to 9, **characterized in that** in the state Z₂ the controller (5) activates a power supply of at least one electrical system (6,11) of the means (1) of locomotion.

11. Device according to one of Claims 6 to 10, **characterized in that** the key receptacle (2) is arranged in a dashboard (4), and in the state Z₄ the ignition key (3) does not project out of the dashboard (4) by more than 2 mm.

12. Device according to one of Claims 6 to 11, **characterized in that** at the transition from state Z₄ into the state Z₁, the key receptacle (2) pushes out the ignition key (3) in such a way that the front part of the ignition key (3) is located in the position A₁.

13. Device according to Claim 12, **characterized in that** the position A₁ is selected in such a way that the ignition key (3) does not project out of the dashboard (4) by more than 3 cm.

14. Device according to one of Claims 6 to 13, **characterized in that** the ignition key (3) is located at the key receptacle (2).

15. Device according to Claim 7 and Claim 14, **characterized in that** the controller (5) is coupled to a radio receiver, and the controller (5) reaches the state Z₂ as soon as the radio receiver receives a corresponding radio signal if the controller (5) is in the state Z₀, and **in that** if the controller (5) is in the state Z₂, said controller (5) goes into the state Z₀ if it does not receive a corresponding radio signal in a specific time interval.

16. Device according to Claim 15, **characterized in that** the states Z₁ and Z₂ coincide.

## Revendications

1. Procédé pour faire fonctionner un moyen de locomotion (1), une clé d'allumage (3) étant enfoncée jusque dans une position A₂ dans un logement de clé (2), un état Z₂ étant atteint par le simple enfoncement jusque dans la position A₂, cet état étant connu sous le terme de serrage 15, et lorsque le procédé se trouve dans l'état Z₂, un état Z₃ étant atteint par un enfoncement supplémentaire de la clé d'allumage (3) jusque dans une position A₄, un moteur (9) du moyen de locomotion (1) étant démarré dans l'état Z₃, **caractérisé en ce que** lorsque le procédé se trouve dans l'état Z₃, un relâchement de la clé d'allumage (3), de sorte que la clé d'allumage (3) soit poussée vers la position A₃, permet d'atteindre un état Z₄ dans lequel le moteur tourne, et **en ce que** la position A₃ est disposée entre la position A₂ et la position A₄.

2. Procédé selon la revendication 1, **caractérisé en ce que** lorsque le procédé se trouve dans l'état Z₄, par un enfoncement renouvelé de la clé d'allumage (3), un état Z₁ du procédé est atteint, le moteur (9) étant arrêté lors de la transition de l'état Z₄ dans l'état Z₁.

3. Procédé selon la revendication 2, **caractérisé en ce que** le procédé, lors de l'enfoncement de la clé d'allumage (3) jusque dans la position A₂ depuis un état initial Z₀ du procédé passe d'abord par l'état Z₁, dans lequel le moteur (9) est arrêté, avant d'atteindre l'état Z₂.

4. Procédé selon la revendication 3, **caractérisé en ce que** lors d'une transition de l'état Z₀ dans l'état Z₁, un blocage du démarrage (7) et un verrouillage du volant de direction (8) du moyen de locomotion (1) sont désactivés et une alimentation en courant d'au moins une installation électrique (6, 11) du moyen de locomotion (1) est activée, et **en ce que** lors d'une transition de l'état Z₁ dans l'état Z₀, le blocage du démarrage (7) du moyen de locomotion (1) et le verrouillage du volant de direction (8) du moyen de locomotion (1) sont activés et l'alimentation en courant de l'au moins une installation électrique (6, 11) du moyen de locomotion (1) est désactivée.

5. Procédé selon la revendication 3 ou 4, **caractérisé en ce que** lors d'une transition de l'état Z₁ dans l'état Z₂, une alimentation en courant de l'au moins une installation électrique (6, 11) du moyen de locomotion (1) est activée, et **en ce que** lors d'une transition de l'état Z₂ dans l'état Z₁, l'alimentation en courant de l'au moins une installation électrique (6, 11) du moyen de locomotion (1) est désactivée.

6. Dispositif pour faire fonctionner un moyen de locomotion (1) avec un logement de clé (2) pour enfoncer une clé d'allumage (3), une commande (5) étant prévue, laquelle est configurée de telle sorte qu'elle détecte la position de la clé d'allumage (3) dans le logement de clé (2), la commande (5) étant configurée de telle sorte qu'elle reconnaisse si la clé d'allumage (3) est enfoncée jusqu'à une position A₂, la commande (5) adoptant un état Z₂ par simple enfoncement jusque dans la position A₂, cet état étant connu sous le terme de serrage 15, lorsque la commande (5) se trouve dans l'état Z₂ et que la commande (5) reconnaît que la clé d'allumage (3) est enfoncée davantage jusque dans la position A₄, la commande (5) adoptant un état Z₃ la commande (5) dans l'état Z₃ démarrant un moteur (9) du moyen de locomotion (1), **caractérisé en ce que** lorsque la commande (5) se trouve dans l'état Z₃, par un relâchement de la clé d'allumage (3), de sorte que la clé d'allumage (3) soit poussée vers la position A₃, un état Z₄ est atteint, dans lequel le moteur (9) tourne, et **en ce que** la position A₃ est disposée entre la position A₂ et la position A₄.

7. Dispositif selon la revendication 6, **caractérisé en ce que** lorsque la commande (5) se trouve dans l'état Z₄ et que la commande (5) reconnaît que la clé d'allumage (3) est enfoncée jusqu'au-delà de la position A₃, la commande (5) adopte un état Z₁, la commande (5) arrêtant le moteur (9) lors de la transition de l'état Z₄ dans l'état Z₁.

8. Dispositif selon la revendication 7, **caractérisé en ce que** la commande (5), lors de l'enfoncement de la clé d'allumage (3) jusque dans la position A₂ à partir d'un état initial Z₀ de la commande (5), passe d'abord par un état Z₁.

9. Dispositif selon la revendication 8, **caractérisé en ce que** la commande (5) dans l'état Z₁, désactive un blocage du démarrage (7) et un verrouillage du volant de direction (8) du moyen de locomotion (1), et active une alimentation en courant d'au moins une installation électrique (6, 11) du moyen de locomotion (1).

10. Dispositif selon l'une quelconque des revendications 6 à 9, **caractérisé en ce que** la commande (5), dans l'état Z₂, active une alimentation en courant d'au moins une installation électrique (6, 11) du moyen de locomotion (1).

11. Dispositif selon l'une quelconque des revendications 6 à 10, **caractérisé en ce que** le logement de clé (2) est disposé dans un tableau de bord (4) et la clé d'allumage (3) dans l'état Z₄ ne ressort pas de plus de 2 mm du tableau de bord (4).

12. Dispositif selon l'une quelconque des revendications 6 à 11, **caractérisé en ce que** le logement de clé (2) repousse la clé d'allumage (3) lors de la transition de l'état Z₄ dans l'état Z₁ de telle sorte que la partie avant de la clé d'allumage (3) se trouve dans la position A₁.

13. Dispositif selon la revendication 12, **caractérisé en ce que** la position A₁ est choisie de telle sorte que la clé d'allumage (3) ressorte de plus de 3 cm hors du tableau de bord (4).

14. Dispositif selon l'une quelconque des revendications 6 à 13, **caractérisé en ce que** la clé d'allumage (3) est montée sur le logement de clé (2).

15. Dispositif selon la revendication 7 et la revendication 14, **caractérisé en ce que** la commande (5) est accouplée à un récepteur radio et la commande (5) atteint l'état Z₂ dès que le récepteur radio reçoit un signal radio correspondant, dans la mesure où la commande (5) se trouve dans l'état Z₀, et **en ce que** la commande (5), lorsqu'elle se trouve dans l'état Z₂, passe dans l'état Z₀ si elle ne reçoit aucun signal radio correspondant dans un intervalle de temps déterminé.

16. Dispositif selon la revendication 15, **caractérisé en ce que** les états Z₁ et Z₂ coïncident.
